**Europäisches Patentamt**

**European Patent Office**

**Office européen des brevets**

(19)

(11) Veröffentlichungsnummer: **0 133 235**
A2

(12) # EUROPÄISCHE PATENTANMELDUNG

(21) Anmeldenummer: **84108285.2**

(51) Int. Cl.⁴: **B 62 B 3/10**, G 09 F 21/04

(22) Anmeldetag: **13.07.84**

(30) Priorität: **16.07.83 DE 8320538 U**

(43) Veröffentlichungstag der Anmeldung: **20.02.85**
**Patentblatt 85/8**

(84) Benannte Vertragsstaaten: **BE DE FR GB IT NL SE**

(71) Anmelder: **Suur, Roland, Gartenstrasse 18,
D-7536 Ispringen (DE)**
Anmelder: **Bloch, Claus, Ahornstrasse 32,
D-7538 Keltern 4 (DE)**

(72) Erfinder: **Suur, Roland, Gartenstrasse 18,
D-7536 Ispringen (DE)**
Erfinder: **Bloch, Claus, Ahornstrasse 32,
D-7538 Keltern 4 (DE)**

(74) Vertreter: **Hubbuch, Helmut, Dipl.-Ing et al,
Patentanwälte Dr. Rudolf Bauer Dipl.-Ing. Helmut
Hubbuch Dipl.-Phys. Ulrich Twelmeier Westliche
Karl-Friedrich-Strasse 29-31, D-7530 Pforzheim (DE)**

(54) **Einkaufswagen.**

(57) Die Erfindung betrifft einen Einkaufswagen, sog. S-B-Wagen mit korbartigem Drahtgestell auf einem Fahrgestell montiert mit Schiebe-Handgriff an einer Stirnseite, über welchem eine Informationstafel angeordnet ist quer zur Blickrichtung des den Wagen schiebenden Einkäufers, welche Tafel vorzugsweise mit elektronischen Anzeigeelementen zur Fernübertragung von einer Zentrale aus bestückt ist.

EP 0 133 235 A2

I

Beschreibung:

Die Erfindung betrifft einen Einkaufswagen zur Aufnahme und zum Transport von einzukaufendem Gute - Ware - insbesondere zur Verwendung in Selbstbedienungsläden - sogen. SB-Wagen - bestehend aus einem korbartigen, auf einem Fahrgestell angeordneten Drahtgestell, welches an einer der Stirnseiten mit einem Schiebe-Handgriff versehen ist, der die Gestellbreite übergreift und an beidseitigen Auslegern am Gestelloberrand angebracht ist.

Vorallem in größeren Selbstbedienungsläden ist der Gebrauch solcher Einkaufswagen üblich, damit die ausgewählte Ware gut sichtbar untergebracht zur Zahlstelle zu transportieren ist. Beim Einkauf ist somit ein Einkaufswagen am Handgriff zu ergreifen und durch den Laden zum  Einfüllen der einzukaufenden Ware zu schieben. Um dies zu ermöglichen, sind zwischen den einzelnen, der zu verkaufenden Waren aufnehmenden Regalen, Einkaufsstraßen vorgesehen, wobei diese im allgemeinen jeweils bestimmten Warenarten zugeordnet sind. Es besteht aber oft eine gewisse Schwierigkeit, bestimmte Güter zu finden, vorallem weil in diesen Selbstbedienungsläden kaum Hilfestellung durch Bedienungspersonal erwartet werden kann. Es besteht demnach der Bedarf nach Information, wo bestimmte Güter gefunden werden können.

Weiter besteht auch seitens der Verkaufsleitung der Wunsch nach Werbung, besonders auch für Waren, welche schnellstmöglich umgesetzt werden müssen, aber natur-

0133235

*2*

gemäß auch zur Umsatzsteigerung bei anderen Waren.

Aufgabe der Erfindung ist es nun diesem Informationsbedarf abzuhelfen. Dies wird gemäß der Erfindung
mit Einkaufswagen gemäß dem Oberbegriff des Anspruchs 1
erreicht durch die Anordnung einer Informationstafel
an einer der beiden Stirnseiten quer zur Blickrichtung
des den Wagen schiebenden Einkäufers, welcher beidseits am Handgriff oder mit demselben an den Auslegern
befestigt ist.

Da jedermann beim Einkauf einen solchen Einkaufswagen
zu benutzen hat, fällt sein Blick beim Schieben des
Einkaufswagens zwangsläufig auch auf die so angebrachte
Informationstafel, auf welcher neben Informationen, die
dem Käufer zum Finden  der von ihm einzukaufenden Waren dienen, auch Werbehinweise angebracht sein können,
die auf bevorzugt zu verkaufende Artikel u.a. mehr aufmerksam   machen.

Der Informationsgehalt dieser Tafeln kann noch dadurch
erweitert werden, daß sie veränderbar sind, so kann
die Informationstafel aus einem Rahmen gebildet sein,
in welchem ein beschriftbarer Schild aus Kunststoff,
Pappe od. dgl. einschiebbar ist. So können diese Schilder leicht durch Austausch  aktualisiert werden.
Auch ist es möglich die Informationstafel, die aus einem
beschriftbaren, an beiden Breitseiten aufwickelbarem
Band besteht, das entweder vom Verkäufer oder auch
vom Einkaufenden in die gewünschte Position gebracht

0133235

. 3

werden kann. So können beispielsweise die Warengruppen alphabetisch mit ihrem Standort auf dem Band aufgetragen sein, so daß der Kunde diesen Standort leichter finden kann.

Nach einem weiteren Gedanken der Erfindung kann die Informationstafel auch mit elektronischen Anzeigeelementen bestückt sein, welche vorzugsweise über einen Empfängerteil von stationären Sendern betätigbar sind. Diese können jeweils beim Durchgang durch die Einkaufsstraße auf stationäre Sender ansprechen und die hier greifbaren Artikel oder auch bevorzugt zu verkaufende Waren anzeigen oder es kann deren Anzeige auch von zentralen Sendern allein oder zusätzlich betrieben werden.

Der brückenförmige Bügel kann in einer ersten Ausführungsform mit dem Handgriff verbunden oder mit diesem auch einstückig sein oder er kann auch mit beidseitigen Flanschen an den Auslegern des Drahtgestells zusammen mit dem Handgriff an denselben befestigt sein. Die erste Ausführungsform empfiehlt sich insbesondere bei der Erst-Herstellung dieser Einkaufswagen, die zweite Ausführung vorallem dann, wenn derartige Informationstafeln nachträglich an Einkaufswagen anzubringen sind.

Vorzugsweise soll die Informationstafel nach der Erfindung mit einem brückenförmigen Bügel über dem Handgriff angebracht sein. Hierbei kann der Bügel aus Kunststoff bestehen, oder Draht gebildet sein, ebenso wie auch die Informationstafel aus entsprechenden Materialien herzustellen ist. In einer weiteren, bevorzugten Ausführungsform kann der brückenförmige Bügel einstückig mit der Informationstafel, insbesondere auch Weichplastik hergestellt sein. Weichplastik ist deshalb zu empfehlen, weil es sehr beständig, insbesondere gegen mechanische Angriffe ist und auch, da solche Einkaufswagen oft im Freien stehen, wetterfest ausgeführt werden kann. Diese Ausführung ermöglicht es auch, an der Rückseite der Informationstafel Kinderspielzeug anzubringen, zumal oft kleine Kinder zum Einkaufen mitgenommen werden und diese gern im Einkaufswagen sitzen und sich dabei so mit dem Spielzeug, wie beispielsweise Rechenkugeln und dgl. beschäftigen können.

Die Wagen sind auch für die elektronisch - optische und/oder eine akustische Anzeige bzw. Information, die letztere mit einem Flachlautsprecher in der Informationstafel und jeweiligem Empfangsteil mit Batterie und/oder Solarzellen zu versehen.

In der Zeichnung sind beispielsweise bevorzugte Ausführungsformen des Gegenstandes der Erfindung schematisch dargestellt und zwar zeigen:

Figur 1 die Ansicht einer Gestellstirnseite mit Handgriff und Informationstafel und

Figur 2 die perspektivische Ansicht eines Einkaufwagens mit wahlweiser Anordnung einer elektronischen

0133235

5

Anzeigetafel.

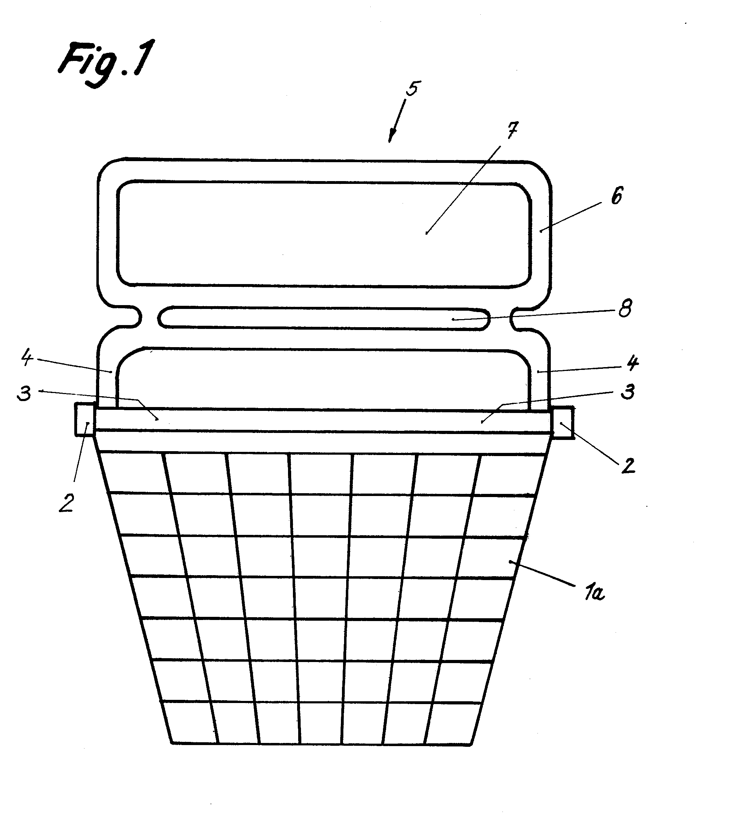

Nach Figur 1 ist am korbförmigen Drahtgestell 1, welches auf einem hier nicht dargestellten Fahrgestell angeordnet ist, an dessen (1) Stirnseite 1a am Gestelloberrand über Ausleger 2 ein Handgriff 3, bevorzugt aus Kunststoff, angebracht. Nach der Darstellung ist über diesem Handgriff 3 ein brückenförmiger Bügel 4 angeordnet und fest mit dem Handgriff 3 verbunden; auch kann der Bügel 4 mittels Flanschen zusammen mit dem Handgriff 3 an den Auslegern 2 befestigt sein. Mit dem brückenförmigen Bügel 4 ist eine Informationstafel 5 verbunden, welche hier aus einem Rahmen 6 besteht mit in diesen Rahmen 6 einschiebbarem Schild 7. In einem Feld 8, zwischen dem brückenförmigen Bügel 4 und der Informationstafel 5 kann noch der Name des Selbstbedienungsladens angebracht werden, um der Mitnahme solcher Wagen vorzubeugen.

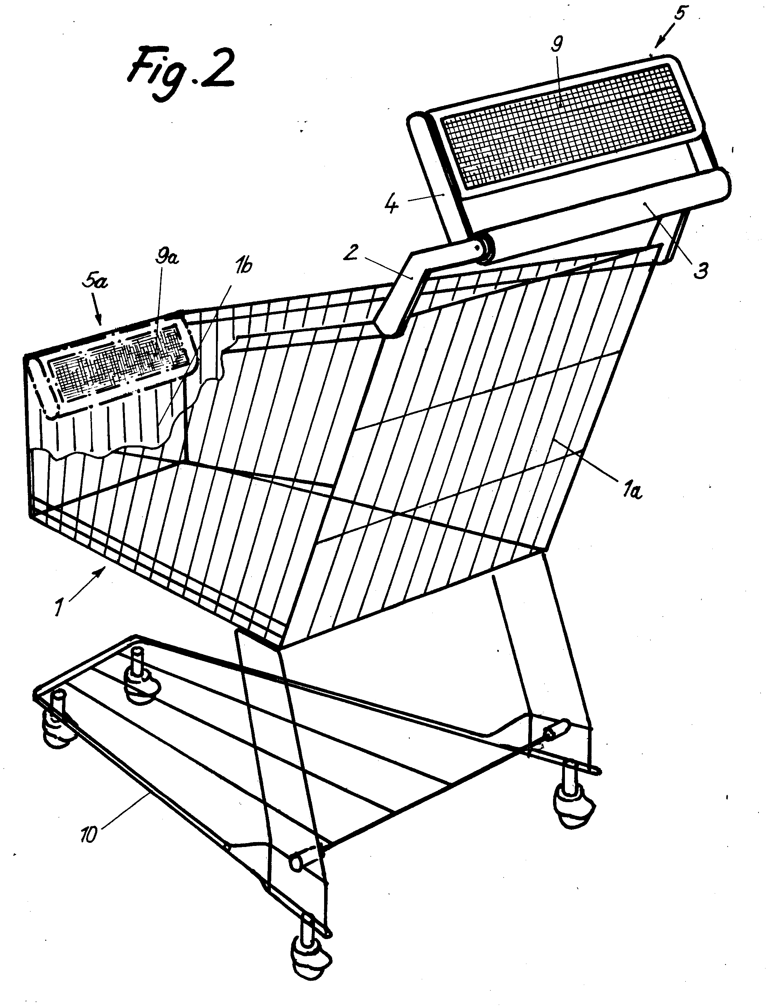

In Figur 2 ist sodann in perspektivischer Ansicht das korbförmige Drahtgestell 1 dargestellt auf einem Fahrgestell 10 montiert, wobei wiederum über Ausleger 2 ein Handgriff 3 an der Stirnseite 1a vorgesehen ist mit einem Bügel 4, auf welchem eine Informationstafel 5 mit elektronischen Anzeigeelementen 9 bestückt ist. Letztere (9) können über ein Empfängerteil von stationären Sendern aus betätigt werden. Wie strichpunktiert dargestellt, kann hierbei die Informationstafel 5a mit elektr. Anzeigeelementen 9a auch an der Stirnseite 1b des Drahtgestells 1 vom Einkaufswagen angeordnet sein, in jedem Falle in Blickrichtung des den Wagen schiebenden Einkäufers.

- 6 -

Im übrigen kann auch, wie hier nicht besonders dargestellt, die Informationstafel einen Empfänger mit Flachlautsprecher zur Weitergabe akustisch Informationen
allein oder zusätzlich enthalten. In beiden Fällen
können Batterien und/oder Solarzellen als Energiequellen
dienen, wobei die ersteren beispielsweise im Handgriff
und die letzteren beispielsweise auf der Informationstafel angeordnet werden können.

PATENTANWÄLTE  0133235

**DR. RUDOLF BAUER · DIPL.-ING. HELMUT HUBBUCH**
**DIPL.-PHYS. ULRICH TWELMEIER**

WESTLICHE 29 – 31 (AM LEOPOLDPLATZ)
D-7530 PFORZHEIM (WEST-GERMANY)
☎ (0 72 31) 10 22 90/70 · TELEGRAMME: PATMARK

**Telex 783 929 patma d**
9. Juli 1984 II/Wa

Herr Roland Suur, D-7536 Ispringen
Herr Claus Bloch, D-7538 Keltern - 4

---

Einkaufswagen

---

Patentansprüche:

1. Einkaufswagen zur Aufnahme und zum Transport von einzukaufendem Gut - Ware - insbesondere zur Verwendung in Selbstbedienungsläden - sogen. S-B-Wagen - bestehend aus einem korbartigen, auf einem Fahrgestell angeordneten Drahtgestell , welches an einer seiner Stirnseiten  mit einem Schiebe-Handgriff versehen ist, der die Gestellbreite übergreift und an beidseitigen Auslegern am Gestelloberrand angebracht ist, gekennzeichnet durch  die Anordnung einer Informationstafel (3) an einer der beiden Stirnseiten (1a, 1b) quer zur Blickrichtung des den Wagen schiebenden Einkäufers, insbes. oberhalb des Handgriffs (3) an einem brückenförmigen Bügel (4), welcher beidseits am Handgriff (3) oder mit denselben an den Auslegern (2) befestigt ist.

2. Einkaufswagen nach Anspruch 1, dadurch gekennzeichnet, daß der brückenförmige Bügel (4) einstückig mit der Informationstafel (5), insbes. aus Kunststoff in Weichplastik gebildet ist.

0133235

- 2 -

3. Einkaufswagen nach Anspruch 1, dadurch gekennzeichnet, daß der brückenförmige Bügel (4) und/oder die Informationstafel (5) aus Metall, insbes. Draht gebildet ist.

4. Einkaufswagen nach Anspruch 1, dadurch gekennzeichnet, daß die Informationstafel (5) aus einem Rahmen (6) besteht, in welchem ein beschriftbarer Schild (7) einschiebbar ist.

5. Einkaufswagen nach Anspruch 1, dadurch gekennzeichnet, daß die Informationstafel (5) durch ein beschriftbares, an beiden Breitseiten aufwickelbares Band gebildet ist.

6. Einkaufswagen nach Anspruch 1, dadurch gekennzeichnet, daß die Informationstafel bei Anordnung über dem Handgriff auf der Rückseite mit Spielzeug, wie Rechenkugeln und dgl. bestückt ist.

7. Einkaufswagen nach Anspruch 1, dadurch gekennzeichnet, daß die Informationstafel (5) mit elektronischen Anzeigeelementen (9) bestückt ist, welche vorzugsweise über einen Empfängerteil von stationären Sendern betätigbar sind.

8. Einkaufswagen nach Anspruch 1, dadurch gekennzeichnet, daß die Informationstafel einen Empfänger mit Flachlautsprecher zur Wiedergabe akustische Informationen enthält.

0133235

- 3 -

9. Einkaufswagen nach Anspruch 7 oder 8, dadurch
   gekennzeichnet, daß als Energiequelle für die
   elektronisch und/oder akustische Anzeige einschl.
   Empfängerteil Batterien und/oder Solarzellen
   dienen, welche vorallem im letzteren Falle neben
   den Anzeigeelementen an der Informationstafel angeordnet sind.

**Fig.1**

Fig.2